# EUROPÄISCHE PATENTSCHRIFT

(11) **EP 1 344 600 B1**
(45) Veröffentlichungstag und Bekanntmachung des Hinweises auf die Patenterteilung: **07.07.2004**
(21) Anmeldenummer: 03005591.7
(22) Anmeldetag: 12.03.2003
(51) Int. Cl.: B23Q 1/01

(54) **Tragstruktur für ein maschinelles Hochgeschwindigkeitsbearbeitungsgerät**
Bearing structure for a high speed machine tool
Structure porteuse pour une machine-outil à usinage rapide

(30) Priorität: 14.03.2002 DE 10211754
(43) Veröffentlichungstag der Anmeldung: 17.09.2003
(73) Patentinhaber: Meyer, Yvonne, 24217 Schonberg (DE)
(72) Erfinder: Meyer, Peter, 24217 Schönberg (DE)
(74) Vertreter: Biehl, Christian, Dipl.-Phys.

(56) Entgegenhaltungen:
- DE-U- 29 705 152
- US-A- 4 655 022
- US-A- 5 247 749

## Beschreibung

Die Erfindung betrifft eine Tragstruktur für ein maschinelle Hochgeschwindigkeitsbearbeitungsgerät z.B. eine Hochgeschwindigkeitsfräse.

Hochgeschwindigkeitsfräsen, wie sie in Bearbeitungszentren eingesetzt werden, dienen dazu, größere Werkstücke bis zu einigen 10 m Länge mit Hilfe von Fräs- und Schneidwerkzeugen, insbesondere mit Hilfe von vorbestimmten Computerdaten möglichst genau herzustellen.

Hierzu müssen bei großen zurückzulegenden Wegen hochgenau einzelne Orte angefahren werden und auch bei der Bearbeitung die Strecken hochpräzise zurückgelegt werden.

Andererseits jedoch werden die Fräsen mit erheblicher Geschwindigkeit von einem Punkt an den nächsten gefahren und es sind erhebliche Lasten von den verfahrbaren Komponenten aufzunehmen, was ihr wiederum zu verfahrendes Gewicht insgesamt erhöht.

Gleichzeitig tragen die großen zu verfahrenden Strukturen neben hohen zu bewegenden Massen für Motore und Bearbeitungsgeräte zur Schwingungsanfälligkeit bei, die ebenfalls vermieden werden soll. Insgesamt stellt sich also das Problem, eine möglichst große Steifigkeit der große Spannweiten überbrückenden Konstruktion bei geringem Gewicht zu erreichen. Je geringer das Gewicht ist, umso kleinere, leichtere Motore können eingesetzt werden.

Die Grundkonstruktion entspricht dabei derjenigen des deutschen Gebrauchsmusters DE-U1 297 05 152 der Anmelderin, bei der bereits ein Bearbeitungszentrum mit einer Mehrzahl von Ständern, einem Paar von auf den Ständern ruhenden Linearführungen und einer auf den Linearführungen in X-Richtung verfahrbaren Gantry, sowie einer auf der Gantry in Y-Richtung verfahrbaren Traverse und einer von der Traverse in Z-Richtung auf und nieder verfahrbaren Pinole beschrieben ist. Es wird dort bereits vorgeschlagen, Kohlefaserrohre zur Herstellung der Gantry miteinander über Leichtmetallmuffen zu verbinden.

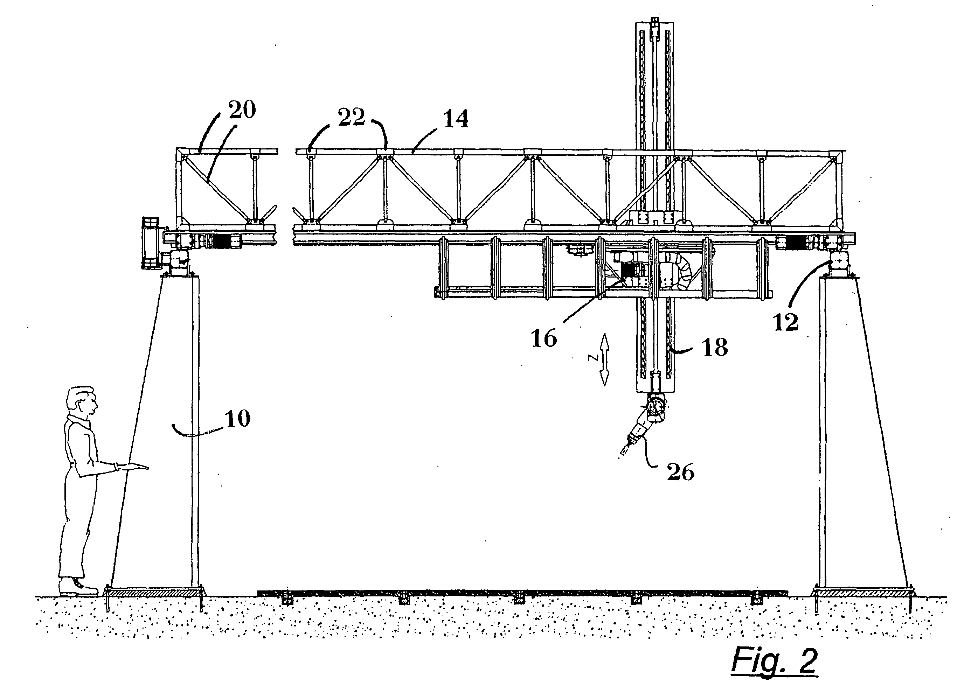

Dabei wird dies jedoch in einer üblichen Tragrahmenstruktur mit einer Vielzahl von rechtwinklig und diagonal zueinander stehenden Streben zwischen zwei sich horizontal erstreckenden Gantryträgern gelöst. Eine Abbildung der Anlage nach dem Stand der Technik ist in Fig. 2 vorhanden.

Nachteilig sind die vielen Verbindungselemente, die nur kurze Kohlefaserstangen miteinander verbinden. In jeder Verbindung können Toleranzen entstehen und werden unterschiedliche Materialien miteinander verbunden. Die Vorteile von Kohlefaserstangen, nämlich ihr geringes Gewicht bei hoher Steifigkeit, wird durch die Vielzahl an Verbindungspunkten, in denen Toleranzen entstehen können, und auf jeden Fall wegen des Materialübergangs erhöhte Dimensionierungen gewählt werden müssen, wodurch das Gewicht zunimmt, aufgehoben.

Der Erfindung liegt die Aufgabe zugrunde, die Tragstruktur zu verbessern und leichter und steifer zu gestalten.

Erfindungsgemäß wird dies durch die Merkmale des Hauptanspruches gelöst. Die Unteransprüche geben vorteilhafte Ausführungen wieder.

Insbesondere ist vorteilhaft, dass die Gantry mit sich strahlförmig von einem Zentralpunkt oberhalb der Verfahrschiene für die Traverse zu den Schienen für die Traverse hinabstrekkenden Kohlefaserstangen oder bevorzugt Kohlefaserrohren gebildet ist.

Weitere Vorteile und Merkmale der Erfindung ergeben sich aus nachfolgender Beschreibung eines bevorzugten Ausführungsbeispiels. Dabei zeigt:
- Fig. 1: die Darstellung der erfindungsgemäßen Gantry mit einer auf der linken Seite nach unten ausgefahrenen Pinole und rechts gestrichelt angedeuteten angehobenen Pinole,
- Fig. 2: eine Gantry nach dem Stand der Technik,
- Fig. 3: eine Draufsicht auf eine Gantry nach Fig. 2 und die beiden sie tragenden Linearführungen,
- Fig. 4: eine Detaildarstellung der die Gantry versteifenden Kohlefaserstangenbzw. -rohr-Struktur,
- Fig. 5: eine perspektivische Darstellung der Gantry, und
- Fig. 6: eine Darstellung der Traverse, innerhalb der ein Teil der Pinole dargestellt ist.

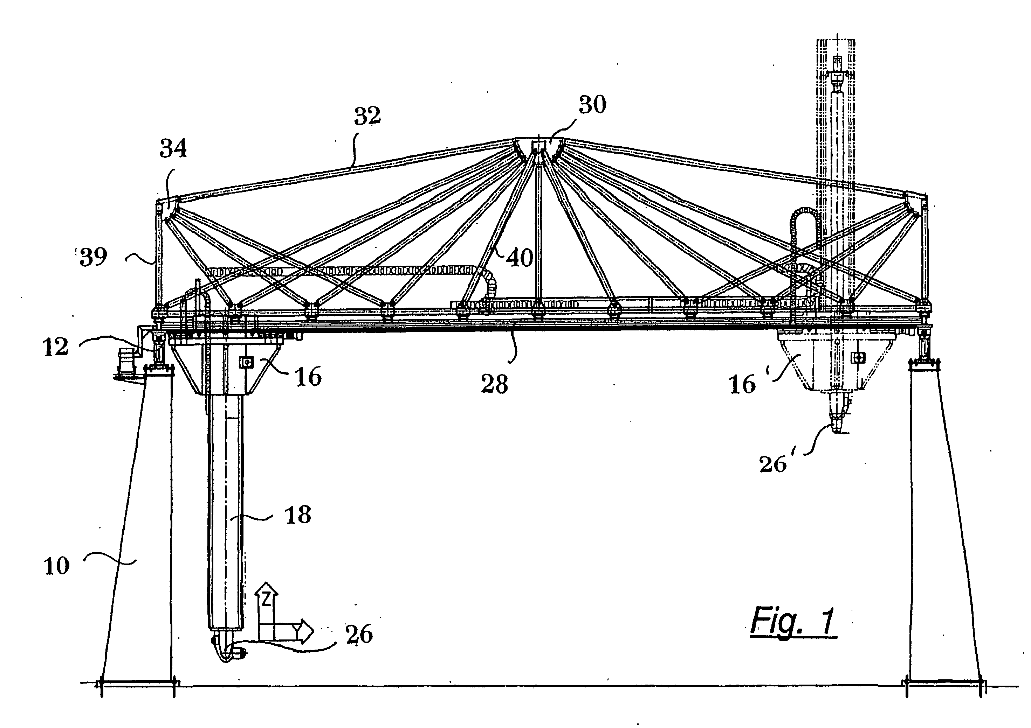

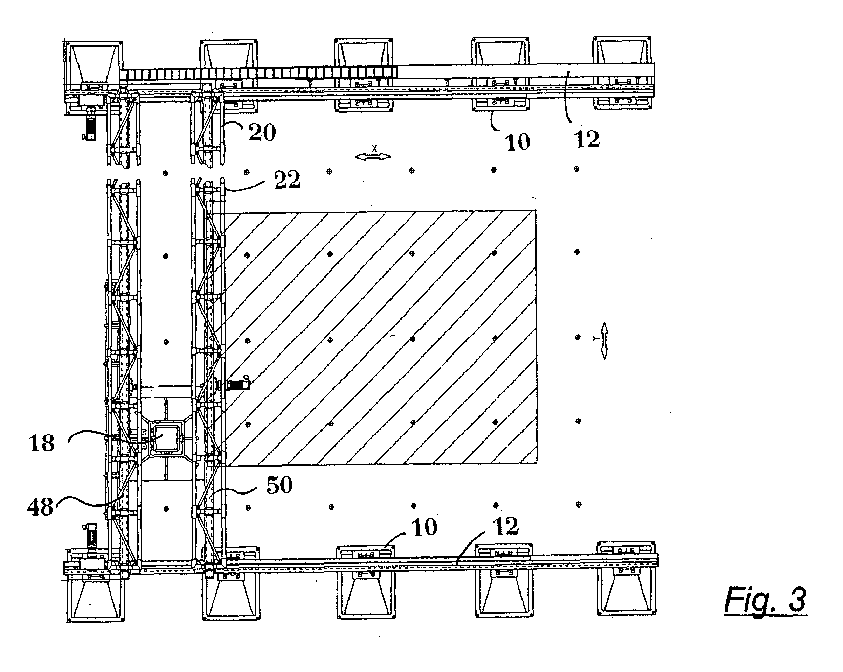

Die in der Fig. 1 dargestellte erfindungsgemäße Vorrichtung zeigt die gegenüber der Fig. 2 (Stand der Technik) leichtere, mit längeren Kohlefaserstangen (oder wiederum bevorzugt aus Kohlefaserrohren) ausgebildete Gantry 14, bei der von einem oberhalb der beiden Traversenführungen 48, 50 angeordneten zentralen zwei Zentrallagern 30 eine Anzahl von Kohlefaserstangen 36 auf die - wie in der Fig. 3 ersichtlich - sich in Y-Richtung und parallel zueinander erstreckenden Spuren 48, 50 für die Traverse 15 ausgerichtet sind.

Diese hängebrückenartig angeordneten Kohlefaserstangen versteifen die Halterung für die Traverse 16, damit diese auf keinen Fall auch nur Millimeter durchhängt, wenn die schwere Pinole dort ruht. Dies unterscheidet die Anforderungen der Erfindung erheblich von der die beispielsweise Brücken aufweisen, da dort solches "Durchhängen" durchaus in Kauf genommen wird.

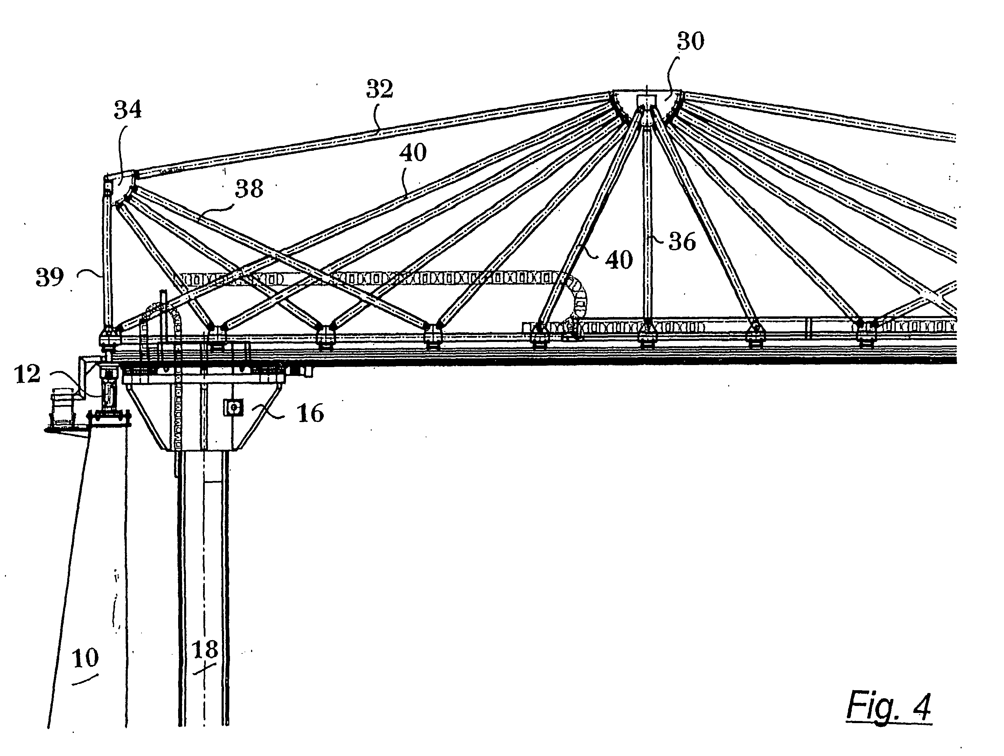

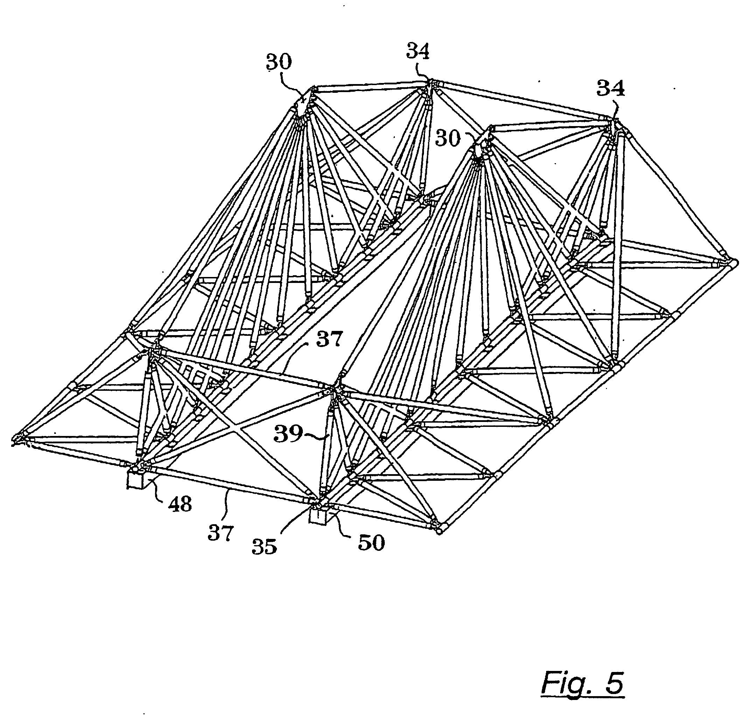

Zur Vermeidung von Verbiegungen der Traversenspuren aufeinanderzu werden Parallelstangen 28 seitlich neben den Traversenführungen vorgesehen (siehe Fig. 5), die über zwei Streben 40 ebenfalls an den Zentrallagern und - bevorzugt - weiter an zwei weiteren Tragpunkte 34 senkrecht oberhalb der Linearführungen 12, über Stangen 38 (vgl. Fig. 4) die insbesondere bis ins mittlere Drittel der Gantry reichen, gehalten sind.

Diese Tragpunkte 34 sind jeweils mit den über der gleichen Linearführung 10; 12 angeordneten Tragpunkten 34 der anderen Traversenführung und Basispunkten 35 (unterhalb aller Spannpunkte auf den Traversenführungen) mit "X"förmig angeordnten sowie zusätzlichen Horizontalstreben 37 (parallel zu den Linaerführungen 10, 12) versteift. Auch zwischen den Basispunkten 35 sind zwei solche Horizontalstreben 37 vorgesehen.

Dabei hat sich als vorteilhaft herausgestellt, dass die vier Punkte 34 und die beiden mittigen Zentrallager 30 jeweils senkrecht oberhalb der beiden Verfahrspuren 48, 50 für die Traverse angeordnet werden und von dem mittigen Punkten 30 sich strahlförmig herab erstreckende Stangen 36 zur jeweiligen Traversenspur 48, 50 erstrecken.

Von den Tragpunkten 34 erstrecken sich Stangen 38 zu inneren Bereichen der Traversenführungen 48 und 50 während sich senkrechte Abstützungen 39 unterhalb der Tragpunkte 34 auf Basispunkten 35 abstützen und je eine Firststange 32 die sekundären Tragpunkte 34 an dem Zentrallager 30 abstützt.

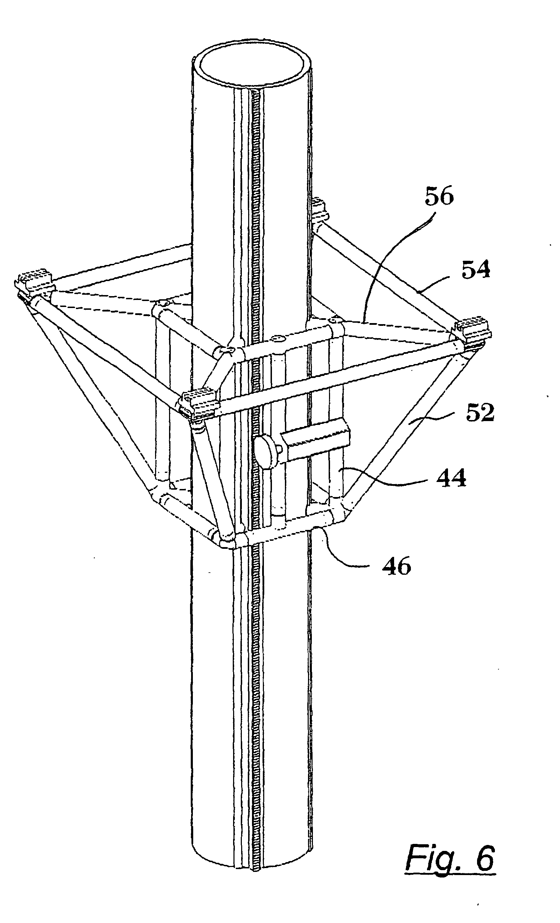

Weiter wird vorgeschlagen, auch die in Fig. 1, 3 und 4 noch als Vollprofil aus Sandwichmaterial dargestellte Traverse durch ein Gerüst von Kohlefaserstangen zu ersetzen. In Fig. 6 ist dargestellt, wie zwei quadratische horizontal angeordnete aus vier Stangen 46 bestehende die Pinole umgreifende Viereckstrukturen durch längs verlaufende Rohre 44 zu einem den Verfahrmotor tragenden inneren Kastenstruktur miteinander verbunden werden.

Nicht dargestellt, aber Gegenstand einer weiteren Ausführungsform ist es, den inneren "Käfig" aus Stangen 46 und 44, (insgesamt zwölf Kohlefaserstangen) durch einen Kohlefaserzylinder mit Ausnehmungen für den Angriff wenigtens eines Motors auszubilden, wodurch trotz der größeren Flächen Gewicht wegen der Verringerung der zur realisierenden Verbindungen gespart werden kann.

Dieser Teil der Traverse 16, der mittige, senkrecht verlaufende, mit der Pinole 18 coaxiale und die Pinole 18 führende Kohlefaserzylinder kann einen, oder aber auch eine Vielzahl von Durchbrüche aufweisen.

Sich trapezförmig nach oben schräg erstrekende Stangen 52 aus den unteren Eckpunkten sind zu einem dritten aus Stangen oder wieder Rohren 54 gebildeten Viereckstruktur geführt, das die Ansatzpunkte für die Traversenführungen an seinen Ecken trägt. Wie in allen anderen Ecken laufen auch in diesen Eckpunkten vier Rohre zusammen, da noch vier Versteifungsrohre 56 von den oberen Eckpunkten des Innenkastens im wesentlichen horizontal diesen mit der dritten Viereckstruktur verbinden.

Mit Bezugszeichen 26 ist in Fig. 1 und 2 das Bearbeitungswerkzeug selbst dargestellt, wobei eine Fig. 1 mit Bezugszeichen 26' in einer zweiten Position (gestrichelt) dargestellt ist.

Bezugszeichen 38 schließlich bezeichnet die unter den Knotenpunkten der Tragrahmenpunkten 30, 34 befindlichen senkrechten Streben, die sich auf der einen Spur 48 (vgl. Fig. 3) abstützen. In Fig. 3 ist jedoch noch im übrigen die Tragrahmenstruktur der Fig. 2 - des Standes der Technik - dargestellt, also die kurzen Kohlefaserstangen, während die erfindungsgemäße Lösung in den Figuren 1 und 4 näher erläutert wird.

## Patentansprüche

1. Tragrahmenstruktur für ein Hochgeschwindigkeitsbearbeitungsgerät mit sich in x-Richtung erstreckenden Linearführungen (12),
- einer an den Linearführungen verfahrbaren Gantry (14), die
- eine in y-Richtung an der Gantry (14) verfahrbare Traverse (16) trägt, die in sich
- eine senkrecht ausgerichtete, in z-Richtung auf und ab verfahrbare Pinole (18) trägt, an der Bearbeitungsgeräte (26) angeordnet sind,
wobei die Gantry Kohlefaserstangen (32, 36, 38, 40) als Verstrebung aufweist,
**dadurch gekennzeichnet, daß**
die Gantry (14) bildende Kohlefaserstangen (40) sich fächerförmig von je einem mittigen Zentrallager (30) oberhalb der mit zwei Führungen (48, 50) gebildeten Gantry zu diesen Führungen herab erstrecken.

2. Tragrahmenstruktur nach Anspruch 1, **dadurch gekennzeichnet, daß** weitere Kohlefaserstangen (38) von sekundären Tragpunkten (34) sich zu inneren Bereichen der Traversenführungen (48, 50) erstrecken, wobei senkrechte Abstützungen (39) unterhalb der sekundären Tragpunkte (34) sich auf Basispunkten (35) abstützen und je eine Firststange (32) die sekundären Tragpunkte (34) an dem Zentrallager (30) abstützt.

3. Tragrahmenstruktur nach Anspruch 1 oder 2, **dadurch gekennzeichnet, daß** die Kohlefaserstangen (32, 36, 38, 40) als Rohre ausgebildet sind.

4. Tragrahmenstruktur nach einem der vorangehenden Ansprüche, **dadurch gekennzeichnet, daß** die Traverse (16) aus einem Kohlefaserstangengerüst gebildet ist.

5. Tragrahmenstruktur nach einem der vorangehenden Ansprüche, **dadurch gekennzeichnet, daß** die Traverse (16) einen mittigen mit der Pinole (18) koaxialen und diese führenden Kohlefaserzylinder aufweist.

## Claims

1. Support frame structure for a high speed working implement with linear guides (12) extending in the X-direction, a gantry (14) displaceable on the linear guides and which carries a crossbeam (16) displaceable on the gantry (14) in the Y-direction and which carries within it a vertically oriented spindle sleeve (18), which can be moved up and down in the Z-direction and on which are located the working implements (26), the gantry having carbon fibre rods (32, 36, 38, 40) as a brace, **characterized in that** the carbon fibre rods (40) forming the gantry (14) extend in fan-like manner from in each case one central bearing (30) above the gantry formed with two guides (48, 50) down towards the said guides.

2. Support frame structure according to claim 1, **characterized in that** further carbon fibre rods (38) extend from secondary support points (34) to inner areas of the crossbeam guides (48, 50), vertical supports (39) below the secondary support points (34) being supported on base points (35) and in each case one ridge beam (32) supports the secondary support points (34) on the central bearing (30).

3. Support frame structure according to claim 1 or 2, **characterized in that** the carbon fibre rods (32, 36, 38, 40) are constructed as tubes.

4. Support frame structure according to one of the preceding claims, **characterized in that** the crossbeam (16) is formed by a carbon fibre rod framework.

5. Support frame structure according to one of the preceding claims, **characterized in that** the crossbeam (16) has a central carbon fibre cylinder coaxial to and guiding the spindle sleeve (18).

## Revendications

1. Structure porteuse pour une machine d'usinage à grande vitesse avec des glissières linéaires (12) s'étendant en direction x,
- un portique (14) mobile sur les glissières linéaires, qui porte
- une traverse (16) mobile en direction y sur le portique (14), qui porte en elle
- un fourreau (18) vertical, mobile vers le haut et vers le bas en direction z, sur lequel sont disposés des appareils d'usinage (26),
le portique présentant des poutrelles en fibre de carbone (32, 36, 38, 40) en guise de contre-fiches,
**caractérisée par le fait que**
les poutrelles en fibre de carbone (40) formant le portique (14) s'étendent, chaque fois à partir d'un support central (30) situé au-dessus du portique formé par deux glissières (48, 50), en éventail descendant vers ces glissières.

2. Structure porteuse selon la revendication 1, **caractérisée par le fait que** d'autres poutrelles en fibre de carbone (38) s'étendent à partir de points de support secondaires (34) vers des zones intérieures des glissières (48, 50), des étais verticaux (39) s'appuyant sur des points de base (35) au-dessous des points de support secondaires (34) et une poutrelle faîtière (32) étayant à chaque fois les points de support secondaires (34) sur le support central (30).

3. Structure porteuse selon la revendication 1 ou 2, **caractérisée par le fait que** les poutrelles en fibre de carbone (32, 36, 38, 40) sont en forme de tubes.

4. Structure porteuse selon l'une des revendications précédentes, **caractérisée par le fait que** la traverse (16) est formée d'un échafaudage de poutrelles en fibre de carbone.

5. Structure porteuse selon l'une des revendications précédentes, **caractérisée par le fait que** la traverse (16) présente un cylindre en fibre de carbone central, coaxial avec le fourreau (18) et guidant celui-ci.
